# EUROPÄISCHE PATENTANMELDUNG

(11) **EP 2 666 352 A1**
(43) Veröffentlichungstag der Anmeldung: **27.11.2013**
(21) Anmeldenummer: 13157525.0
(22) Anmeldetag: 04.03.2013
(51) Int. Cl.: A01F 29/09, A01B 76/00, A01D 43/08, A01D 75/18

(54) **Landwirtschaftliche Erntemaschine**

(30) Priorität: 25.05.2012 DE 102012104525
(71) Anmelder: CLAAS Selbstfahrende Erntemaschinen GmbH, 33428 Harsewinkel (DE)
(72) Erfinder: Look, Stefan, 47533 Kleve (DE); Kleingräber, Karl-Josef, 48231 Warendorf (DE); Isfort, Heinrich, 48249 Dülmen (DE)

(57) **Zusammenfassung**

Eine landwirtschaftliche Erntemaschine (1) weist Vorrichtungen zur Aufnahme, zur Förderung und/oder zur Aufbereitung eines Erntegutes auf, wobei Bauelemente der Vorrichtungen zur Aufnahme (7) und/oder Förderung (19) des Erntegutes als zumindest ein Förderboden (9, 10) und/oder als zumindest ein Leitblech und/oder als zumindest ein Förderschacht (5, 21) sowie als zumindest ein Förderelement (2, 3, 12, 13, 20) ausgebildet sind. Weiterhin weist die Vorrichtung zur Aufbereitung (8) des Erntegutes als Bauelemente zumindest eine Walze (18) und/oder zumindest ein rotierendes Messer (15, 28) auf. Zur Verringerung von Verschleiß und Korrosion der Vorrichtungen sowie zur Vermeidung von Ablagerungen aus Bestandteilen des Erntegutes auf diesen Vorrichtungen sollen die Bauelemente (2, 3, 5, 6, 9, 10, 11, 12, 13, 14, 15, 16, 17, 18, 20, 21, 22, 23, 24, 28, 29, 30, 31, 32) an ihrer mit dem Erntegut oder überfahrenen Erdreich in Kontakt gelangenden Oberfläche zumindest partiell mit einer verschleißfesten und hydrophoben Beschichtung in Form einer diamantähnlichen Kohlenstoffschicht (25, 26) versehen sein.

## Beschreibung

Die Erfindung betrifft eine landwirtschaftliche Erntemaschine mit Vorrichtungen zur Aufnahme, zur Förderung und/oder zur Aufbereitung eines Erntegutes, wobei Bauelemente der Vorrichtungen zur Aufnahme und/oder Förderung des Erntegutes als zumindest ein Förderboden und/oder als zumindest ein Leitblech und/oder als zumindest ein Förderschacht sowie als zumindest ein Förderelement ausgebildet sind und wobei die Vorrichtung zur Aufbereitung des Erntegutes als Bauelemente zumindest eine Walze und/oder zumindest ein rotierendes Messer aufweisen.

Landwirtschaftliche Erntemaschinen, die aufgrund der technischen Entwicklung für viele Anwendungen als Vollernter ausgebildet sind, stehen in der Landwirtschaft als Vorrichtungen für eine Vielzahl unterschiedlicher Ernteverfahren zur Verfügung. Der Begriff landwirtschaftliche Erntemaschinen soll in diesem Zusammenhang auch solche Maschinen mit einbeziehen, die in der Gemüseernte sowie in der Ernte von Obst und Trauben eingesetzt werden. Bei den Erntemaschinen erfolgt stets eine Aufnahme des Erntegutes durch einen entsprechenden Erntevorsatz, an den sich in der Regel Förderelemente anschließen, die das aufgenommene Erntegut in zumindest eine Vorrichtung zu dessen Aufbereitung fördern.

Unter Aufbereitung ist in diesem Zusammenhang sowohl eine Veränderung des Zustandes des Erntegutes als auch eine Trennung des über den Erntevorsatz aufgenommenen Erntegutes von bestimmten Bestandteilen und Verunreinigungen zu betrachten. Nachdem diese Aufbereitung erfolgt ist, wird der für eine Weiterverarbeitung bzw. für den Handel bestimmte Teil des Erntegutes über weitere Fördereinrichtungen an eine Sammeleinrichtung, die parallel zur Erntemaschine fährt oder als Tank bzw. Bunker Bestandteil der Erntemaschine ist, weitergegeben.

Ein Beispiel für eine derartige landwirtschaftliche Erntemaschine ist ein Feldhäcksler, bei dem ein Halmgut oder Mais über einen Erntevorsatz aufgenommen, dann einer aus Vorpresswalzen, einem Häckselaggregat und Nachzerkleinerungseinrichtungen bestehenden Aufbereitungseinrichtung zugeführt und schließlich über ein Gebläse und einen Auswurfkrümmer einem Sammelwagen zugeführt wird.

Bei einer als Mähdrescher ausgebildeten landwirtschaftlichen Erntemaschine erfolgt die Aufnahme des Erntegutes ebenfalls über einen Erntevorsatz, von dem aus das Erntegut über einen Schrägförderer einer als Dreschwerk und Trenneinrichtungen ausgebildeten Aufbereitungseinrichtung zugeführt wird. Geerntete Getreidekörner, Rapsfrüchte oder Maiskörner gelangen aus dieser Aufbereitungseinrichtung in einen Korntank, während das Stroh, Maisstengel und andere für die Ernte nicht vorgesehenen Bestandteile auf dem Feld abgelegt werden. Auch ein Mähwerk mit nachgeordnetem Konditionierer oder ein Ladewagen sollen als Erntemaschinen angesehen werden, bei denen die nachfolgend erläuterte Erfindung angewandt werden kann.

Bei Rüben- oder Kartoffelvollerntern wird das Erntegut durch Werkzeuge eines Vorsatzes aus dem Boden aufgenommen und anschließend in einer Aufbereitungseinrichtung von den Krautbestandteilen sowie von der beim Aufnehmen des Erntegutes in den Vollernter gelangenden Erde getrennt, woraufhin das gereinigte Erntegut ebenfalls einer Sammeleinrichtung zugeführt wird. Schließlich sind die landwirtschaftlichen Erntemaschinen für die Trauben- oder Beerenernte zumeist als Einrichtungen mit einem Vorsatz bekannt, der zumeist über Rüttelstäbe die Sträucher oder Weinrebenzeilen derart in Schwingungen versetzt, dass das Erntegut auf den Vorsatz fällt, von wo aus es über Transportbänder in eine Aufbereitungseinrichtung gelangt, über die die Trauben und Beeren von den übrigen Bestandteilen getrennt werden. Von dort aus erfolgt in der Erntemaschine über entsprechende Fördereinrichtungen eine Weiterleitung der Trauben und Beeren in eine Sammeleinrichtung.

Alle vorgenannten Erntemaschinen weisen die nachfolgend aufgeführten Probleme auf: Aufgrund hoher, stets steigender Durchsatzmengen wirken nämlich in erheblichem Maße Bearbeitungs- und Reibkräfte an vielen Teilen die bei der Aufnahme, der Förderung und der Aufbereitung des Erntegutes mit diesem und den in ihm enthaltenen zum Teil abrasiv wirkenden Bestandteilen in Berührung kommen. Die Folge davon ist, dass diese Teile, die als Förderböden, Leitbleche, Förderschächte, Förderelemente sowie zinken- oder messerartige Bauelemente zur Aufbereitung des Erntegutes ausgebildet sind, einem starken Verschleiß ausgesetzt sind. Verschlissene Bauteile müssen stets rechtzeitig ausgetauscht werden, um eine erhebliche Beschädigung der Erntemaschine und/oder Ernteverluste auszuschließen. Dieser Austausch kann aber wegen der zum Teil schwierigen Zugänglichkeit dieser Bauelemente mit erheblichem Zeitaufwand und somit mit erheblichen Kosten verbunden sein.

Neben diesem Verschleiß, der durch Reibung verursacht wird, tritt das Problem auf, dass das von dem Erntevorsatz aufgenommene Erntegut generell oder je nach Zustand zu starker Korrosion an den vorgenannten Bauteilen und somit zur einer Beschleunigung des an diesen auftretenden Verschleißes führt. Es handelt sich dabei um Reaktionen zwischen dem im jeweiligen Erntegut enthaltenen Pflanzensaft und dem für diese Bauteile verwendeten Metall, wobei mikrochemische Vorgänge zu einer Beschleunigung dieses Verschleißes führen. Schließlich tritt auch das Problem auf, das entweder Bestandteile des Erntegutes oder Bestandteile von dessen Verunreinigungen an den Oberflächen der Bauteile der Erntemaschine anhaften und folglich die Arbeitsweise der Erntemaschine so negativ beeinflussen, dass Ernteverluste auftreten können.

Eine landwirtschaftliche Erntemaschine der im Oberbegriff des Patentanspruchs 1 angegebenen Gattung ist aus der DE 196 41 211 B4 bekannt. Es handelt sich dabei um einen selbstfahrenden Feldhäcksler, bei dem das von einem Erntevorsatz geschnittene und aufgenommene Erntegut in eine Häckseleinrichtung und von dort zur Aufbereitung in eine Konditioniereinrichtung gelangt. Von dort aus wird das aufbereitete Erntegut einem Nachbeschleuniger zugeführt, welcher dieses aufbereitete Erntegut über einen Auswurfkrümmer in ein Transportfahrzeug fördert. Dabei soll der Auswurfkrümmer in einem Bereich, in welchem das Erntegut umgelenkt wird, mit einem auswechselbaren Prallblech versehen sein. Das ist der Fall, weil dieser Wandbereich des Auswurfkrümmers zum einen erheblichen Verschleiß ausgesetzt ist und sich zum anderen in diesem Bereich des Auswurfkrümmers insbesondere im Zusammenhang mit diesem Verschleiß Bestandteile des Ernteguts ansammeln bzw. dort anhaften, die zu Verstopfungen führen.

Weiterhin ist aus der DE 10 2005 016 334 A1 ein Auswurfkrümmer für einen Feldhäcksler bekannt, bei dem dieser aus rahmen- und/oder gitterförmigen Stützelementen bestehen soll, zwischen denen ebenfalls austauschbare Leitbleche angeordnet sind, so dass diese bei einem auftretenden Verschleiß ausgetauscht werden können.

Es ist Aufgabe der vorliegenden Erfindung, den reibungsbedingten und aufgrund von Korrosion auftretenden Verschleiß an den unmittelbar mit dem Erntegut oder mit dessen Verunreinigungen in Kontakt gelangenden Bauelementen zu verringern, sowie den Erntegutfluss insgesamt zu verbessern.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 sollen die Bauelemente an ihrer mit dem Erntegut oder überfahrenem Erdreich in Kontakt gelangenden Oberfläche zumindest partiell mit einer verschleißfesten und hydrophoben Beschichtung in Form einer diamantähnlichen Kohlenstoffschicht versehen sein.

Eine derartige diamantähnliche Kohlenstoffschicht, die auch als DLC (diamont-likecarbon) bezeichnet wird, weist eine hohe Mikrohärte, einen äußerst geringen Reibkoeffizienten und eine chemische Resistenz gegenüber den aus Pflanzensäften gebildeten Säuren auf. Durch diese extreme Härte und Abriebfestigkeit kann der zuvor erläuterte Verschleiß an den Bauelementen vermieden werden, so dass es zu keinem reparaturbedingten Stillstand der Erntemaschine und dem damit verbundenen Reparaturkosten kommen kann. Diese Oberfläche ist auch chemisch resistent gegenüber dem aus dem Erntegut oder aus dessen Bestandteilen gebildeten Säuren, wodurch auch die ansonsten auftretende Korrosion vermieden wird. Schließlich weist die Beschichtung auch den Vorteil auf, dass sie hydrophob wirkt und somit das Anhaften von Wasser oder anderen Flüssigkeiten vermieden wird. Dadurch kommt es auch zu keinen Anhaftungen von Pflanzenrückständen oder der gemeinsam mit dem Erntegut durch die Erntemaschine geführten Verunreinigungen.

Demgegenüber ist nach den Druckschriften DE 196 41 211 B4 und DE 10 2005 016 334 A1 innerhalb dieser Erntemaschine keine verschleißfeste Beschichtung der mit dem Erntegut in Berührung kommenden Oberfläche vorgesehen. Stattdessen sollen die entsprechenden Bauteile, die einem starken Verschleiß ausgesetzt sind, leicht austauschbar sein.

Gemäß der vorliegenden Erfindung sind hingegen Bauteile, die zuvor einem erheblichen Verschleiß ausgesetzt waren, mit der Verschleißbeschichtung in Form der diamantähnlichen Kohlenstoffschicht versehen, so dass ein Austausch dieser Bauelemente über die gesamte Gebrauchsdauer der Erntemaschine entfallen kann oder entsprechende Intervalle für deren Austausch bzw. Reparatur zumindest erheblich verlängert werden.

Da entsprechende Erntemaschinen nach dem heutigen Entwicklungsstand zumeist mit sehr hohen Durchsatzmengen von mehreren 100 Tonnen pro Stunde betrieben werden, ist eine entsprechende verschleißfeste Ausbildung der mit dem Erntegut in Berührung kommenden Bauteile von großer Bedeutung. Außerdem ist zu berücksichtigen, dass ein Stillstand der Erntemaschine wegen des Austauschs von Verschleißteilen während der Erntesaison fatale Folgen hätte. Aufgrund des Reifegrads des Erntegutes und der gerade herrschenden Witterungsbedingungen muss die Erntemaschine stets, ohne dass es zu irgendwelchen Verzögerungen kommt, benutzt werden. Ein weiterer Vorteil der diamantähnlichen Kohlenstoffschicht ist deren hydrophobe Wirkung, die allgemein als Lotuseffekt bekannt ist. Die entsprechende Oberfläche weist dabei den Vorteil auf, dass Flüssigkeiten von dieser abperlen und somit nicht zur Bildung von Rückständen führen können. Diese Wirkung tritt auch bei der erfindungsgemäßen Beschichtung mit dem diamantähnlichen Kohlenstoff auf, so dass sich an der Oberfläche weder Säfte aus dem geernteten Pflanzen noch Erdrückstände, feuchter Staub usw. an dieser Oberfläche sammeln können.

Weiterhin ist vorgesehen, die diamantähnliche Kohlenstoffschicht an der Oberfläche des Bauelements mittels eines PVD-Verfahrens oder eines PACVD-Verfahrens herzustellen. Das PVD-Verfahren findet in einer zumeist evakuierten Beschichtungskammer statt, in der das abzuscheidende Material in fester Form vorliegt. Dabei wird das Material durch den Beschuss mit Laserstrahlen, magnetisch abgelenkten Ionen oder Elektronen sowie durch Lichtbogenentladung verdampft, wobei es zur Schichtbildung auf der zu beschichtenden Oberfläche kommt. Im Gegensatz dazu wird die DLC-Schicht beim PACVD-Verfahren direkt aus einem Argon-Methan-Plasma abgeschieden. Mittels der vorgenannten Verfahren lässt sich die erfindungsgemäße DLC-Schicht sehr prozesssicher und auch kostengünstig auf die Oberfläche der entsprechenden Bauteile von Erntemaschinen aufbringen.

Außerdem soll die diamantähnliche Kohlenstoffschicht (DLC-Schicht) eine amorphe Struktur aufweisen und aus einer Mischung von sp³-hybridisiertem Kohlenstoff mit sp²-hybridisiertem Kohlenstoff bestehen. Dabei können in ein entsprechendes Kohlenstoffnetzwerk auch Fremdatome eingebunden sein, wobei es sich bei diesen um Wasserstoff, Silicium oder Fluor handeln kann.

In weiterer Ausgestaltung der Erfindung ist vorgesehen, die landwirtschaftliche Erntemaschine als selbstfahrenden Feldhäcksler oder selbstfahrenden Mähdrescher auszubilden, wobei Gutleitbleche und/oder Kufen eines mit der Erntemaschine verbundenen Erntevorsatzes zumindest partiell mit diamantähnlichen Kohlenstoffschichten versehen sind. Gerade in diesem Einzugsgebiet der Erntemaschine kommt es ohne eine entsprechende verschleißfeste Beschichtung zu erheblichen Verschleiß. Daher sollen die entsprechenden Bleche, über die das Erntegut geführt wird, mit der DLC-Schicht versehen sein. Vorteilhaft kann auch eine Beschichtung der Kufen des Erntevorsatzes sein, da diese während des Erntevorgangs zum Teil im Bodenkontakt sind und entsprechend stark verschleißen.

Weiterhin soll die landwirtschaftliche Erntemaschine als selbstfahrender Feldhäcksler zur Ernte von Gras- oder Maissilage sowie von Biomasse für eine Biogasanlage ausgebildet sein, wobei Einzugswalzen zumindest partiell mit der Kohlenstoffschicht versehen sind. Über diese Einzugswalzen wird das geschnittene Erntegut verdichtet, damit an dem nachfolgenden Häckselaggregat höhere Durchsatzmengen realisierbar sind. Außerdem ziehen diese Einzugswalzen das Erntegut vom Erntevorsatz her in die Maschine. Auch die sich in Richtung des Erntegutflusses anschließenden Vorpresswalzen, die für eine nochmalige Verdichtung der Erntegutmatte führen, können in entsprechender Weise mit einer DLC-Schicht versehen sein.

Da auch an den sich daran anschließenden Einrichtungen zur Aufbereitung des gemähten Erntegutes sowohl Verschleiß als auch Korrosion auftreten können, sollen diese ebenfalls wahlweise mit einer DLC-Schicht versehen werden. Es handelt sich dabei um die Häckselmesser, deren Gegenschneiden sowie um Walzen einer Nachzerkleinerungseinrichtung. Da nicht nur an den rotierenden Baueinheiten des Feldhäckslers sondern auch an Blechteilen, mittels welcher ein Förderschacht, ein Auswurfkrümmer oder eine Auswurfklappe gebildet werden, erheblicher Verschleiß durch Reibung oder Korrosion auftreten kann, sollen auch diese Bauteile wahlweise mit einer diamantähnlichen Kohlenstoffschicht versehen werden.

Weitere Verwendungsmöglichkeiten an Erntemaschinen ergeben sich für selbstfahrende Mähdrescher, bei denen insbesondere ein Führungsblech eines Schrägförderers mit der erfindungsgemäßen Beschichtung versehen werden kann. Darüber hinaus besteht aber auch die Möglichkeit, diese Beschichtung an Bauteilen von Mähwerken, Heuwerbungsmaschinen und Ladewagen vorzusehen, an denen in erheblichem Maße Verschleiß auftritt.

Schließlich soll die Verwendung der erfindungsgemäßen Beschichtung nicht nur auf den Bereich der als Geräte für die Halmfruchternte ausgebildeten landwirtschaftlichen Erntemaschinen beschränkt sein; die Erfindung kann auch an Rübenrodern, Kartoffelerntern oder sonstigen Erntemaschinen für Wurzelfrüchte verwendet werden. Bei diesen Maschinen wird vorzugsweise der Bereich mit der Beschichtung versehen werden, über den das Erntegut mit der daran anhaftenden feuchten Erde geführt wird.

Darüber hinaus können aber auch Bauteile von Erntemaschinen, die nicht als klassische landwirtschaftliche Erntemaschinen zu betrachten sind, eine derartige Beschichtung aufweisen. Es handelt sich dabei insbesondere um Trauben- oder Beerenvollernter. Da die Beschichtung besondere Gleiteigenschaften aufweist, können in diesem Fall die Bereiche der Maschine mit der DLC-Schicht versehen sein, über die die Trauben oder Beeren geführt werden, wodurch eine Beschädigung dieser Früchte vermieden werden kann.

Die Erfindung ist nicht auf die angegeben Kombination der Merkmale des Patentanspruchs 1 und der abhängigen Patentansprüche beschränkt. Es ergeben sich darüber hinaus Möglichkeiten, einzelne Merkmale, auch soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Vorteilhafte Ausgestaltungen der Erfindung werden nachfolgend unter Bezugnahme auf die Zeichnungen erläutert. Es zeigen:
- Figur 1: eine Seitenansicht einer als selbstfahrender Feldhäcksler ausgebildeten Erntemaschine ohne Erntevorsatz,
- Figur 2: eine schematische Darstellung eines selbstfahrenden Feldhäckslers mit einem Teilschnitt im Bereich eines Erntevorsatzes sowie einer Einrichtung zur Aufbereitung des Erntegutes und
- Figur 3: eine vergrößerte Darstellung der nach der Figur 2 verwendeten Einrichtung zur Aufbereitung des Erntegutes.

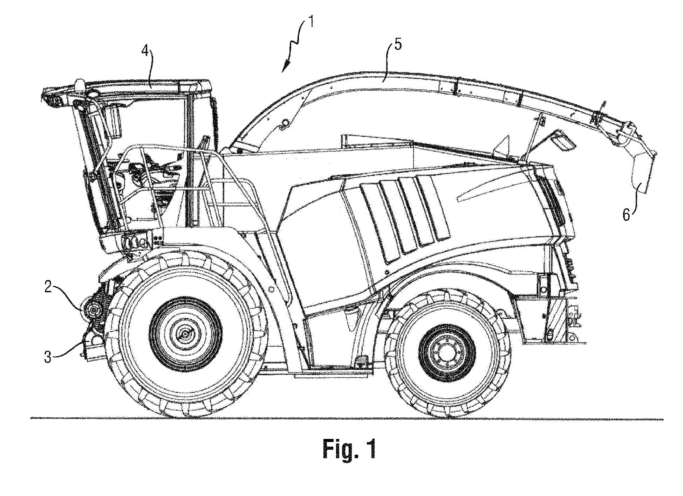

In der Figur 1 ist mit 1 ein selbstfahrender Feldhäcksler bezeichnet, der in seinem frontseitigen Bereich zur Aufnahme eines Erntevorsatzes ausgebildet ist. Da dieser Erntevorsatz entfernt ist, sind Einzugswalzen 2 und 3 sichtbar, über die das vom Erntevorsatz aufgenommene Erntegut verdichtet und in das Innere der Maschine gefördert wird. Weiterhin weist der selbstfahrende Feldhäcksler 1 eine Fahrerkabine 4 und einen verschwenkbaren Auswurfkrümmer 5 auf. Die Verschwenkung des Auswurfkrümmers 5 erfolgt, um das Erntegut gezielt einem nicht näher dargestellten Sammelfahrzeug, das parallel aber versetzt zum Feldhäcksler 1 fährt, zuzuführen. Am Ende des Auswurfkrümmers 5 befindet sich eine Auswurfklappe 6, die um eine horizontale Achse verschwenkbar ist.

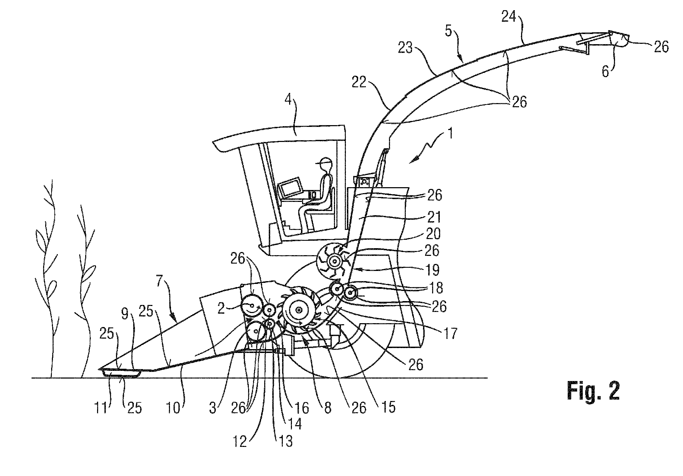

Zur weiteren Erläuterung der Ausbildung des in Figur 1 dargestellten selbstfahrenden Feldhäckslers 1 wird auf die Figur 2 verwiesen, in der ein entsprechender Feldhäcksler 1 schematisch und zum Teil im Schnitt dargestellt ist. In diesem Fall ist der Feldhäcksler 1 im Gegensatz zu der Figur 1 mit einem Erntevorsatz 7 in Form eines Schneiderwerktisches verbunden. Weiterhin weist der Feldhäcksler 1 eine Vorrichtung 8 zur Aufbereitung des Erntegutes sowie den Auswurfkrümmer 5 und die Fahrerkabine 4 auf. Die Fahrerkabine 4 ist oberhalb des Erntevorsatzes 7 bzw. der Vorrichtung 8 zur Aufbereitung des Erntegutes angeordnet.

Der Erntevorsatz 7 ist mit einem Bodenblech 9 und einem schräg verlaufenden Gutleitblech 10 versehen, wobei diese Bauelemente 9 und 10 den Erntevorsatz 7 in Richtung des überfahrenden Bodens begrenzen und das Erntegut in Richtung der Aufbereitungseinrichtung 8 führen. Außerdem ist der Erntevorsatz 7 mit mehreren Kufen 11 versehen, über die der Erntevorsatz 7 auf dem überfahrenden Boden gleitet. An den Erntevorsatz 7 schließen sich die Einzugswalzen 2 und 3 an, die paarweise angetrieben werden und zwischen denen das Erntegut hindurchgeführt wird. Dabei ziehen die Einzugswalzen 2 und 3 das Erntegut nicht nur in die Erntemaschine 1, sondern sie verdichten den Erntegutstrom auch. Eine weitere Verdichtung des Erntegutstroms erfolgt durch die sich daran anschließenden Vorpresswalzen 12 und 13, die ebenfalls paarweise angetrieben werden. Dabei ist die untere Vorpresswalze 12 mit einer glatten Oberfläche versehen und wirkt mit einem Abstreifer 14 zusammen, der das an der glatten Oberfläche anhaftende Erntegut von dieser löst.

Der verdichtete Erntegutstrom gelangt sodann in eine mit Messern versehende Häckseltrommel 15, die mit feststehenden Gegenschneiden 16 zusammenwirkt. Das gehäckselte Erntegut wird anschließend über nicht näher dargestellte seitliche Gutleitbleche und über einen Häckselboden 17 einer Nachzerkleinerungseinrichtung 18 zugeführt. Diese Nachzerkleinerungseinrichtung 18 die auch als Corn-Cracker bezeichnet wird, dient dazu, bei der Ernte von Silomais oder Mais für eine Biogasanlage die Maiskörner derart zu beschädigen, dass diese mit in den anschließenden Gärungsprozess einbezogen werden können.

Unmittelbar hinter der Nachzerkleinerungseinrichtung 18 befindet sich als Teil einer Fördereinrichtung 19 eine Auswurfbeschleuniger-Trommel 20, die das zerkleinerte Erntegut in einen Förderschacht 21 transportiert, wobei sich an diesen Förderschacht 21 der verstellbare Auswurfkrümmer 5 anschließt. Der Auswurfkrümmer 5 ist dabei mit Prallblechen 22, 23 und 24 versehen und weist, wie bereits im Zusammenhang mit der Figur 1 beschrieben, an seinem Ende die ebenfalls verstellbare Auswurfklappe 6 auf.

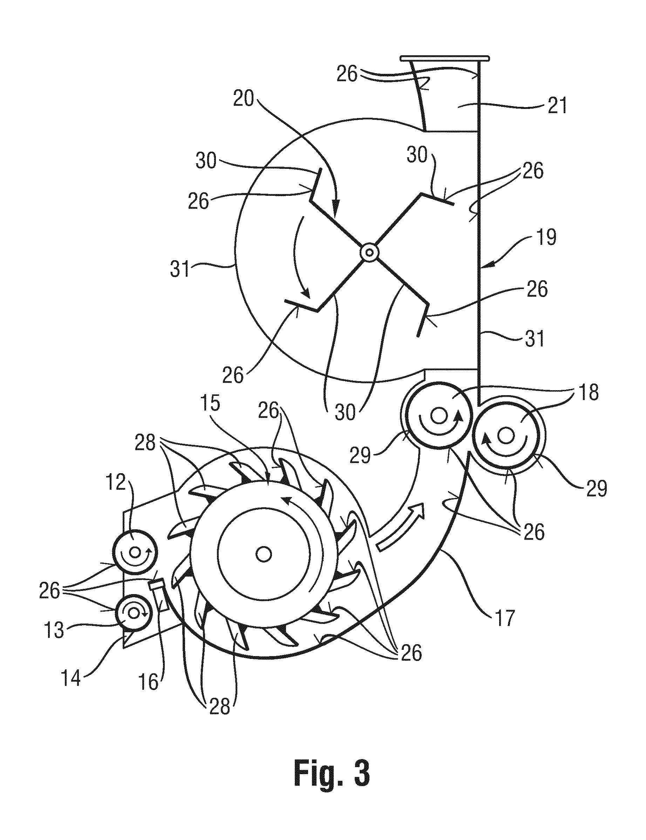

Weiterhin geht aus der Figur 2 hervor, dass das Bodenblech 9, das Gutleitblech 10 und die Kufen 11 des Erntevorsatzes 7 mit einer Beschichtung 25 aus einem diamantähnlichen Kohlenstoff (DLC) versehen sind. Neben diesen Bauelementen des Erntevorsatzes 7 sind auch Bauelemente der Vorrichtung 8 zur Aufbereitung des Erntegutes sowie der Fördereinrichtung 19 mit einer Beschichtung 26 aus einem diamantähnlichen Kohlenstoff versehen. Zur näheren Erläuterung der entsprechenden Anordnung dieser Beschichtung wird auf die Figur 3 verwiesen, in der die Vorrichtung 8 zur Aufbereitung des Erntegutes und die Fördereinrichtung 19 gegenüber Figur 2 vergrößert dargestellt sind.

Wie aus der Figur 3 hervorgeht, sind, soweit es um die Aufbereitungsvorrichtung 8 geht, Mantelflächen 27 der Vorpresswalzen 12 und 13, Schneiden von Messern 28 der Häckseltrommel 15, deren Gegenschneiden 16, die Oberfläche des Häckselbodens 17 und Mantelflächen 30 der Nachzerkleinerungseinrichtung 18 mit der erfindungsgemäßen Beschichtung 26 versehen. Daran schließen sich als Bestandteile der Fördereinrichtung 19 die Auswurfbeschleuniger-Trommel 20 und der Förderschacht 21 an. Aus der Darstellung geht hervor, dass Paddel 30 sowie Innenflächen eines Gehäuses 31 der Auswurfbeschleuniger-Trommel 20 und eine Innenfläche des Förderschachts 21 ebenfalls mit der Beschichtung 26 versehen sind.

Darüber hinaus ist der Figur 2 zu entnehmen, dass die Prallbleche 22, 23 und 24 des Auswurfkrümmers 5, welche den Strom des Häckselgutes umlenken, an ihren dem Erntegut zugewandten Flächen erfindungsgemäß beschichtet sind. Schließlich soll auch die Auswurfklappe 6 in dem Bereich, in dem das Häckselgut auf diese auftrifft, eine DLC-Beschichtung aufweisen.

Bei dem vorstehend beschriebenen Ausführungsbeispiel der Erfindung kommt diamantähnliche Kohlenstoffschicht 25, 26 in Bereichen der Erntemaschine zur Anwendung, in denen Verschleiß durch Reibung und Korrosion auftreten kann. Daher können diese Probleme sehr wirkungsvoll beseitigt werden. Wie bereits dargelegt, besitzt die Beschichtung 25, 26 auch eine hydrophobe Wirkung, so dass Pflanzensäfte rückstandslos von ihr abperlen und sich somit an den Oberflächen keine Rückstände aus den Pflanzensäften, Pflanzenrückständen, Staub, Erde usw. bilden können. Wenngleich in den Figuren zur Erläuterung der Erfindung viele mit dem Erntegut in Kontakt gelangende Bereiche mit der DLC-Beschichtung 25, 26 versehen sind, soll es auch die Lehre der Erfindung sein, nur einzelne dieser Bauteile oder nur Abschnitte von diesen zu beschichten.

**Bezugszeichenliste**

| | |
|---|---|
| 1 | selbstfahrender Feldhäcksler |
| 2 | obere Einzugswalze |
| 3 | untere Einzugswalze |
| 4 | Fahrerkabine |
| 5 | Auswurfkrümmer |
| 6 | Auswurfklappe |
| 7 | Erntevorsatz |
| 8 | Vorrichtung zur Aufbereitung des Erntegutes |
| 9 | Bodenblech von 7 |
| 10 | Gutleitblech von 7 |
| 11 | Kufen von 7 |
| 12 | obere Vorpresswalze |
| 13 | untere Vorpresswalze |
| 14 | Abstreifer |
| 15 | Häckseltrommel |
| 16 | Gegenschneiden von 15 |
| 17 | Häckselboden |
| 18 | Nachzerkleinerungseinrichtung |
| 19 | Fördereinrichtung |
| 20 | Auswurfbeschleuniger-Trommel |
| 21 | Förderschacht |
| 22 | Prallblech |
| 23 | Prallblech |
| 24 | Prallblech |
| 25 | Beschichtung aus diamantähnlichem Kohlenstoff |
| 26 | Beschichtung aus diamantähnlichem Kohlenstoff |
| 27 | Mantelflächen von 12 und 13 |
| 28 | Messer von 15 |
| 29 | Mantelflächen von 18 |
| 30 | Paddel von 20 |
| 31 | Gehäuse |

## Patentansprüche

1. Landwirtschaftliche Erntemaschine (1) mit Vorrichtungen zur Aufnahme, zur Förderung und/oder zur Aufbereitung eines Erntegutes, wobei Bauelemente der Vorrichtungen zur Aufnahme (7) und/oder Förderung (19) des Erntegutes als zumindest ein Förderboden (9, 10) und/oder als zumindest ein Leitblech und/oder als zumindest ein Förderschacht (5, 21) sowie als zumindest ein Förderelement (2, 3, 12, 13, 20) ausgebildet sind und wobei die Vorrichtung zur Aufbereitung (8) des Erntegutes als Bauelemente zumindest eine Walze (18) und/oder zumindest ein rotierendes Messer (15, 28) aufweisen, **dadurch gekennzeichnet, dass** die Bauelemente (2, 3, 5, 6, 9, 10, 11, 12, 13, 14, 15, 16, 17, 18, 20, 21, 22, 23, 24, 28, 29, 30, 31, 32) an ihrer mit dem Erntegut oder überfahrenem Erdreich in Kontakt gelangenden Oberfläche zumindest partiell mit einer verschleißfesten und hydrophoben Beschichtung in Form einer diamantähnlichen Kohlenstoffschicht (25, 26) versehen ist.

2. Landwirtschaftliche Erntemaschine nach Patentanspruch 1, **dadurch gekennzeichnet, dass** die diamantähnliche Kohlenstoffschicht (25, 26) an der Oberfläche des Bauelements (2, 3, 5, 6, 9, 10, 11, 12, 13, 14, 15, 16, 17, 18, 20, 21, 22, 23, 24, 28, 29, 30, 31, 32) mittels eines PVD-Verfahrens (physical vapor deposition) oder eines PACVD-Verfahrens (plasma assisted chemical vapor deposition) hergestellt ist.

3. Landwirtschaftliche Erntemaschine nach Patentanspruch 2, **dadurch gekennzeichnet, dass** die diamantähnliche Kohlenstoffschicht (25, 26) eine amorphe Struktur aufweist und aus einer Mischung von sp³-hybridisiertem Kohlenstoff mit sp²-hybridisiertem Kohlenstoff besteht.

4. Landwirtschaftliche Erntemaschine nach Patentanspruch 1, **dadurch gekennzeichnet, dass** die landwirtschaftliche Erntemaschine als selbstfahrender Feldhäcksler (1) oder selbstfahrender Mähdrescher ausgebildet ist, wobei Gutleitbleche (9, 10) und/oder Kufen (11) eines Erntevorsatzes (7) zumindest partiell mit der diamantähnlichen Kohlenstoffschicht (25) versehen sind.

5. Landwirtschaftliche Erntemaschine nach Patentanspruch 1, **dadurch gekennzeichnet, dass** die landwirtschaftliche Erntemaschine als selbstfahrender Feldhäcksler (1) ausgebildet ist, wobei Einzugswalzen (2 und 3) zumindest partiell mit der diamantähnlichen Kohlenstoffschicht (25) versehen sind.

6. Landwirtschaftliche Erntemaschine nach Patentanspruch 1, **dadurch gekennzeichnet, dass** die landwirtschaftliche Erntemaschine als selbstfahrender Feldhäcksler (1) ausgebildet ist, wobei Vorpresswalzen (12 und 13) zumindest partiell mit der diamantähnlichen Kohlenstoffschicht (25) versehen sind.

7. Landwirtschaftliche Erntemaschine nach Patentanspruch 1, **dadurch gekennzeichnet, dass** die landwirtschaftliche Erntemaschine als selbstfahrender Feldhäcksler (1) ausgebildet ist, wobei Häckselmesser (28) und/oder Gegenschneiden (29) und/oder Walzen einer Nachzerkleinerungseinrichtung (18) zumindest partiell mit der diamantähnlichen Kohlenstoffschicht (26) versehen sind.

8. Landwirtschaftliche Erntemaschine nach Patentanspruch 1, **dadurch gekennzeichnet, dass** die landwirtschaftliche Erntemaschine als selbstfahrender Feldhäcksler (1) ausgebildet ist, wobei ein Förderschacht (21) und/oder ein Auswurfkrümmer (5) und/oder eine Auswurfklappe (6) zumindest partiell mit der diamantähnlichen Kohlenstoffschicht (26) versehen sind.

9. Landwirtschaftliche Erntemaschine nach Patentanspruch 1, **dadurch gekennzeichnet, dass** die landwirtschaftliche Erntemaschine als selbstfahrender Mähdrescher ausgebildet ist, wobei ein Führungsblech eines Schrägförderers und/oder Kufen eines Erntevorsatzes mit der diamantähnlichen Kohlenstoffschicht versehen ist.

10. Landwirtschaftliche Erntemaschine nach Patentanspruch 1, **dadurch gekennzeichnet, dass** die landwirtschaftliche Erntemaschine als Rübenroder, Kartoffelernter, Erntemaschinen für Wurzelfrüchte oder Trauben- bzw. Beerenvollernter ausgebildet ist.
